(19) Europäisches Patentamt
European Patent Office
Office européen des brevets

(11) Numéro de publication : **0 685 501 A1**

# (12) DEMANDE DE BREVET EUROPEEN

(21) Numéro de dépôt : **95401293.6**

(51) Int. Cl.$^6$ : **C08F 290/04**

(22) Date de dépôt : **02.06.95**

(30) Priorité : **03.06.94 FR 9406804**

(43) Date de publication de la demande : **06.12.95 Bulletin 95/49**

(84) Etats contractants désignés : **AT BE CH DE DK ES FR GB GR IE IT LI LU MC NL PT SE**

(71) Demandeur : **RHONE-POULENC CHIMIE**
**25, Quai Paul Doumer**
**F-92408 Courbevoie Cédex (FR)**

(72) Inventeur : **Charmot, Dominique**
**10, rue Colette Audry**
**F-93310 Le Pre Saint Gervais (FR)**
Inventeur : **Viehe, Heinz**
**Clos du Paradis, 76,**
**Grand Manil**
**B-1300 Limal (BE)**
Inventeur : **Oger, Nicole**
**10, Boulevard Hérold**
**F-92000 Nanterre (FR)**

(74) Mandataire : **Dubruc, Philippe et al**
**RHONE-POULENC CHIMIE,**
**Direction de la Propriété Industrielle,**
**25, Quai Paul Doumer**
**F-92408 Courbevoie Cédex (FR)**

## (54) Copolymère polyoléfinique greffé.

(57) La présente invention concerne un copolymère polyoléfinique greffé qui peut être obtenu par copolymérisation radicalaire d'au moins un monomère à insaturation éthylénique avec un macromonomère possédant à l'une de ses extrémités un groupement fonctionnel terminal oléfinique.

Le macromonomère utilisé peut être obtenu par polymérisation d'au moins un monomère à insaturation éthylénique en présence d'un agent de transfert diène conjugué, par exemple selon l'enseignement de EP-A-597 747.

Obtention d'un copolymère greffé à haut poids moléculaire plus particulièrement utilisable sous forme de latex et dans des compositions de revêtement.

EP 0 685 501 A1

La présente invention concerne un copolymère polyoléfinique greffé qui peut être obtenu par copolymérisation radicalaire d'au moins un monomère à insaturation éthylénique avec un macromomère polyolèfinique possédant à l'une de ses extrémités un groupement fonctionnel terminal oléfinique.

Selon l'art antérieur la plupart de ces copolymères greffés sont obtenus par polymérisation anionique, cationique ou polymérisation par transfert de groupe. Les procédés de préparation sont cependant très difficiles à mettre en oeuvre compte tenu, d'une part, de la très grande pureté exigée pour les produits de départ et, d'autre part, des températures de polymérisation généralement très basses.

Certains de ces macromonomères peuvent être obtenus par voie radicalaire par addition à la polymérisation d'un agent de transfert ou d'un amorçeur fonctionnalisés conduisant à des polymères à extrémités OH, COOH ou NH2 qui à leur tour sont modifiés chimiquement pour conduire à des macromonomères à extrémités oléfiniques : voir par exemple G. F. Meijs dans Journal of Macromolecular Science. Macromol. Chem. Phys., C30 (3&4), 305 (1990) et T. Corner dans JOCCA vol. 1992 (8), 307. Ces polymérisation nécessitent cependant deux étapes successives de polymérisation et de réaction chimique qui nécessitent des étapes de purification intermédiaire. Il y a donc un intérêt évident à disposer d'une technique de polymérisation radicalaire permettant de produire des macromères issus d'un monomère A en une seule étape, suivi d'une étape de polymérisation du monomère B pour obtenir un copolymère greffé poly(B)-g-poly(A).

WO-A 8 804 304 décrit l'utilisation de sulfures allyliques comme agents de transfert en polymérisation radicalaire. Cette technique permet d'obtenir des polymères de bas poids moléculaires terminés par une extrémité éthylénique. Les insaturations terminales sont du type acrylate ou styrène toute deux substituées en alpha par un groupe methylthioether. De la même façon Cacioli et al. dans Journal of Macromolecular Science. Macromol Chem., A 23 (7), 839-852 (1986) décrit la synthèse de macromère de polymethylmethacrylate par polymérisation radicalaire en présence de sel de Co(II) tetraphénylporphyrine, où une des deux extrémités de chaîne est terminée par un groupement methacrylate relié par le groupement méthylène en alpha de la double liaison. Le même auteur montre que ces macromères sont très peu réactifs en copolymérisation : soit la conversion en copolymères greffé est faible, soit le taux d'incorporation du macromère est bien inférieur au taux théorique, soit la masse moléculaire du copolymère greffé est faible. Ito et al. dans Polymer Prepint Août 93 vol. 34 (2) p. 620 montre également que les macromères d'acide polyméthacrylique décrits dans WO-A 8 804 304 à extrémités styryles, sont très peu réactifs en copolymérisation avec le styrène (voir notamment p. 621 tableau 2 exemple de WO-A 8 804 304).

On a notamment trouvé selon la présente invention que les macromères issus de la polymérisation d'un monomère éthylénique avec un dérivé du pentadiene (I) décrit ci-dessous permet d'accéder à des copolymères greffés selon un procédé très simple sans étapes de modification chimique ou de séparation intermédiaires avec des taux d'incorporation du macromère très élevé tout en maintenant un haut poids moléculaire.

Le macromonomère utilisé dans le cadre de la présente invention peut être obtenu par polymérisation radicalaire d'au moins un monomère à insaturation éthylénique.

En présence d'une quantité efficace d'un agent de transfert diène conjugué répondant à la formule générale :

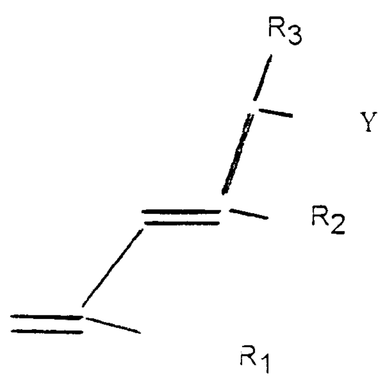

dans laquelle

. les radicaux $R_1$, $R_2$,et $R_3$ identiques ou différents sont choisis parmi un atome d'hydrogène, un radical alkyle linéaire ou ramifié en $C_1$ - $C_6$, un radical phényle, un radical alcoxycarbonyle, un radical acyloxy et un radical acylamino, dans lesquels la partie alkyle est linéaire ou ramifiée en $C_1$ - $C_6$, un radical phénoxycarbonyle et un radical cyano.

Le radical Y est choisi parmi les radicaux :

- un halogène choisi parmi le chlore, le brome et l'iode,

- X - R4 et - C H(R5 R6) dans lesquels :

R4 est choisi parmi un radical alkyle linéaire ou ramifié en $C_1$ - $C_6$, un radical phényle et un radical acyle dont la partie alkyle linéaire ou ramifiée est en $C_1$ - $C_6$

X est un hétéroatome choisi parmi O et S

$R_5$ est un radical capteur d'électrons choisi parmi un radical cyano, carbamoyle, phényloxycarbonyle, alcoxycarbonyle et phénylcarbonyle dans lequel la partie alkyle linéaire, cyclique ou ramifiée est en $C_1$ - $C_6$,

$R_6$ est un radical donneur d'électron choisi parmi un radical alkylthyoéther, phénylthioéther, amino, alkylamino, alcoxy et phénoxy dans lequel la partie alkyle linéaire, cyclique ou ramifiée est en $C_1$ - $C_6$

Ce procédé de fabrication de macromonomère est décrit en détail dans le brevet européen EP-A- 597 747 et est incorporé dans la description de la présente demande.

Comme diéne répondant à la formule 1 et convenant plus particulièrement pour le procédé de l'invention, on recommande d'utiliser le 5-t buthylthio 1,3 pentadiène.

Comme monomère à insaturation éthylénique, on vise plus spécifiquement selon l'invention les monomères choisis parmi le styrène, le butadiène, les esters (métha)acryliques et les nitriles vinyliques.
Par esters (méth)acryliques, on désigne les esters de l'acide acrylique et de l'acide méthacrylique avec les alcools en $C_1$-$C_{12}$, de préférence $C_1$-$C_8$, tels que l'acrylate de méthyle, l'acrylate d'éthyle, l'acrylate de propyle, l'acrylate de n-butyle, l'acrylate d'isobutyle, l'acrylate de 2-éthylhexyle, le méthacrylate de méthyle, le méthacrylate d'éthyle, le méthacrylate de n-butyle, le méthacrylate d'isobutyle... Les nitriles vinyliques incluent ceux ayant de 3 à 12 atomes de carbone, en particulier l'acrylonitrile et le méthacrylonitrile.

Le styrène peut être remplacé en totalité ou en partie par l'alphaméthylstyrène ou le vinyltoluène.

Les autres monomères éthyléniquement insaturés utilisables seuls ou en mèlanges ou copolymèrisables avec les monomères ci-dessus sont notamment :

- les esters vinyliques d'acide carboxylique comme l'acétate de vinyle, le versatate de vinyle, le propionate de vinyle,
- les acides mono-et di- carboxyliques insaturés éthyléniques comme l'acide acrylique, l'acide méthacrylique, l'acide itaconique, l'acide maléique, l'acide fumarique et les mono-alkylesters des acides dicarboxyliques du type cité avec les alcanols ayant de préférence 1 à 4 atomes de carbone et leurs dérivés N-substitués,
- les amides des acides carboxyliques insaturés comme l'acrylamide, le méthacrylamide, le N-méthylolacrylamide ou méthacrylamide,
- les monomères éthyléniques comportant un groupe acide sulfonique et ses sels alcalins ou d'ammonium par exemple l'acide vinylsulfonique, l'acide vinylbenzène sulfonique, l'acide alpha-acrylamido méthylpropane-sulfonique, le 2-sulfoéthylène-méthacrylate,
- les monomères éthyléniques insaturés comportant un groupe amino secondaire, tertiaire ou quaternaire ou un groupe hétérocyclique contenant de l'azote par exemple les vinylpyridines, le vinylimidazole, les (meth)acrylates d'aminoalkyle et les (meth)acrylamides d'aminoalkyle comme le diméthylaminoéthylacrylate ou -méthacrylate, le ditertiobutylaminoéthylacrylate ou -méthacrylate, le diméthylamino méthylacrylamide ou -méthacrylamide... de même que les monomères zwitterioniques comme l'acrylate de sulfopropyl (diméthyl)aminopropyle...

La polymérisation est réalisée de manière connue en soi, en solution, en masse, en émulsion aqueuse lorsque le ou les monomères utilisés ne sont pas miscibles à l'eau, en présence d'au moins un initiateur radicalaire et de l'agent de transfert.
Tout type d'initiateur ou amorçeur à radicaux libres habituels dans la polymérisation radicalaire peut convenir. Des exemples d'initiateurs comprennent les hydroperoxydes tels que l'eau oxygénée, l'hydroperoxyde de diisopropylbenzène, les persulfates de sodium, de potassium ou d'ammonium, et les initiateurs cationiques comme l'azobis(isobutyronitrile) le 4-4'azobis (acide 4-cyano valérique).
Ces initiateurs peuvent être associés à un réducteur comme par exemple le bisulfite. La quantité se situe en général entre 0,05 et 2 % en poids par rapport à la quantité des monomères.

La quantité de diène de formule 1 est généralement comprise entre 0,05 et 10 %, de préférence entre 0,1 et 3 % en poids par rapport au poids total des monomères, suivant le poids moléculaire souhaité pour le macromonomère. Le diène peut être introduit dans le milieu réactionnel soit en totalité au début de la réaction, soit en continu en solution dans les monomères principaux, soit encore en partie initialement et en partie en continu. Lorsque la solubilité du produit dans les monomères est faible, il peut être introduit sous forme d'une suspension simultanément avec les monomères.
La température de polymérisation, fonction de l'initiateur mis en oeuvre, est généralement comprise entre 50°C et 100°C, de préférence entre 70 et 90°C.
La conversion du monomère en macromonomère est généralement limitée à des valeurs inférieures à 90 % (de préférence comprise entre 30 et 85 %) pour éviter de consommer le macromonomère par copolymérisation

de son extrémité diènique.
Dans le cas où la polymérisation est effectuée en émulsion aqueuse, la stabilisation des particules est assurée, si nécessaire, par tout système de stabilisation colloïdale connu comme les émulsifiants anioniques, cationiques, amphotères et non ioniques.
La polymérisation peut être réalisée en continu, en discontinu ou semi-continu avec introduction d'une partie des monomères en continu et être du type "ensemencé" ou "incremental" selon toute variante connue pour l'obtention des particules de structure homogène et hétérogène.

Ce procédé de préparation du macromonomère constitue la première étape du procédé de l'invention.

Selon une deuxième étape en vue d'obtenir le copolymère greffè on copolymèrise par polymérisation radicalaire en présence d'une quantité efficace d'un initiateur ou amorçeur à radicaux libres, un macromonomère préparé à la première étape avec au moins un monomère à insaturation éthylénique.

L'initiateur ou amorçeur à radicaux libres et le monomère à insaturation éthylénique peuvent être choisis parmi l'un de ceux indiqués ci-dessus pour la première étape.

La première étape de préparation du macromonomère est effectuée de préférence en émulsion aqueuse mais elle peut être effectuée en masse ou dans un solvant organique. Le macromonomère peut être isolé par tout moyen, en particulier par précipitation dans un solvant organique.

La deuxième étape de préparation du copolymère greffé est effectuée de préférence dans un solvant organique mais elle peut être effectuée en masse ou en émulsion aqueuse.

Les quantités relatives de monomères et de macromonomères utilisées dans la deuxième étape sont variables et dépendent du pourcentage de greffage du copolymère greffé que l'on souhaite obtenir. L'homme du métier sait adapter ces quantités relatives en fonction du résultat recherché.

On recommande toutefois d'utiliser de 0,1 à 60 % de préférence de 1 à 30 % en poids de macromonomère par rapport au poids du copolymère greffé finalement obtenu.

Les copolymères greffés obtenus par le procédé de l'invention ont des applications nombreuses. On peut par exemple les utiliser comme agent comptabilisant dans les mélanges de polymère, agents d'adhérences sur substrats, agents dispersants, agent de résistance au vieillissement et d'amélioration de la brillance dans les revêtements de polymère. Ils sont également utilisables en tant que polymères associatifs, polymères séquestrants, polymères surfactants, thermoplastiques élastomères.

Les exemples suivants illustrent l'invention sans en limiter la portée.

Sauf mentions contraires tous les pourcentages et parties sont en poids.

**EXEMPLE 1**

***Synthèse de l'agent de transfert 5-t buthylthio 1,3-pentadiène :***

A une solution de 1,4- pentadiène 3-ol (4,2 g ; 0,05 mole) dans l'éther (100 ml) maintenue à -10°C, est ajoutée une solution de $PBr_3$ (10 g ; 0,037 mole) dans l'éther. La réaction est exothermique avec dégagement de HBr. La solution est agitée et maintenue à température ambiante pendant 3 heures. La température est à nouveau abaissée à -10°C et 10 ml d'eau sont ajoutés. Le mélange est extrait à l'hexane (trois fois 20 ml) et la phase organique est lavée deux fois ave une solution saturée de NaCl et séchée sur $MgSO_4$. Le solvant est évaporé et le 5-bromo 1,3-pentadiène est obtenu (7 g ; rendement pondéral 95 %).

1,37 g de carbonate de potassium (0,01 mole), 1,5 g de 5-bromo 1,3-pentadiène (0,01 mole), 0,9 g de t-butyl thiol (0,01 mole) et 50 ml de méthanol sont agités pendant 20 heures à température ambiante ; le méthanol est évaporé au rotavapor et 20 ml d'eau sont ajoutés. La phase aqueuse est lavée avec trois fois 30 ml d'éther et les phases organiques sont rassemblées et séchées sur $MgSO_4$. Le solvant est évaporé et le produit distillé sous pression réduite. On obtient 1,32 g de 5-t butylthio 1,3-pentadiène (rendement pondéral : 87 %).

**EXEMPLE 2**

***2.1- Synthèse du macromonomère polystyrène***

42,7 g (0,41 mole) de styrène sont mélangés à 0,4 g (0,0027 mole) de peroxyde de di t-butyle et 5 g (0,032 mole) de 5-t butylthio 1,3-pentadiène dans un tube de verre de 100 ml. Le milieu réactionnel est désaéré par trois cycles de congélation et mise sous vide, puis le tube est scellé sous vide et porté à 135°C pendant 70 mn. Le contenu est ensuite dilué dans 150 ml de THF et le polymère précipité dans 1,5 l de méthanol. Après filtration, le polymère obtenu est redissous dans 150 ml de THF et de nouveau précipité dans 1,5 l de méthanol. Le filtrat obtenu est séché sous vide à 50°C pendant 8 heures. On obtient ainsi 35 g de macromonomère soit un rendement pondéral de 83 %.

***2.2- Synthèse du copolymère greffé macromonomère polystyrène / methacrylate de méthyle***

Dans un tube de verre on introduit x moles/l d'azosobutyronitrile (AIBN), y moles/l de methacrylate de méthyle (MMA) et z g/l de macromonomère polystyrène préparé selon le procédé ci-dessus de masse moléculaire en nombre variable (Mn en g/mole).

Le tube est scellé sous vide après désaération. La polymérisation est effectuée à 70°C pendant un temps (t) en minute.

On effectue plusieurs essais en faisant varier x, y, z, Mn et t.

On caractérise le copolymère greffé en mesurant la conversion et $R_2$.

Les résultats obtenus sont rassemblés dans le tableau 1 ci-après.

$R_2$ représente le rapport de réactivité du macromonomère, exprimé selon $R_2 = \frac{\text{Log}(1 - P_2)}{\text{Log}(1 - P_1)}$

où $P_1$ et $P_2$ représente la conversion molaire du macromonomère (2) et du macromonomère (1) dans le copolymère. Lorsque $R_2$ est inférieur à 1 cela signifie que le macromonomère s'incorpore préférentiellement dans le copolymère; $R_2$ est donc inversement proportionnel à la réactivité du macromonomère.

Le polymère greffé est isolé par précipitation dans un mélange heptane/cyclohexane (1/1) après dilution dans le THF (tétrahydrofuranne). Cette purification est effectuée deux fois. L'absence de polymère dans le filtrat de précipitation est vérifiée par GPC.

**TABLEAU 1**

**COPOLYMERISATION MACROMONOMERE POLYSTYRENE-DIENE / METHACRYLATE DE MATHYLE**

| Mn du macro-monomère (g/mole) | AIBN mole/l (x100) | MMA mole/l | Macrom-onomère g/l | Temps mn | Conversion % poids | 100 p1 | 100 p2 | R2 * |
|---|---|---|---|---|---|---|---|---|
| 3970 | 1,56 | 4,80 | 99,95 | 42 | 11,80 | 17,29 | 10,65 | 0,595 |
| | 1,46 | 4,48 | 140,00 | 83 | 16,40 | 22,44 | 14,52 | 0,617 |
| | 1,39 | 1,28 | 172,20 | 108 | 17,20 | 22,96 | 14,89 | 0,618 |
| | 1,26 | 3,88 | 233,70 | 110 | 14,26 | 18,31 | 11,81 | 0,621 |
| | 1,24 | 3,06 | 252,70 | 110 | 13,06 | 16,28 | 10,41 | 0,618 |
| 9100 | 0,697 | 2,08 | 44,50 | 266 | 53,55 | 55,27 | 53,25 | 0,950 |
| | | | 74,90 | | 50,30 | 56,55 | 48,57 | 0,800 |
| | | | 113,60 | | 46,65 | 59,37 | 39,83 | 0,560 |
| | | | 142,90 | | 41,25 | 53,34 | 34,82 | 0,560 |
| | | | 189,10 | | 37,80 | 49,15 | 29,80 | 0,520 |
| 12300 | 0,697 | 2,68 | 49,40 | 266 | 39,22 | 71,56 | 55,86 | 0,550 |
| | | | 92,00 | | 52,21 | 56,36 | 50,79 | 0,850 |
| | | | 132,10 | | 51,10 | 67,02 | 43,29 | 0,510 |
| | | | 189,30 | | 44,18 | 57,11 | 33,84 | 0,520 |
| | | | 231,40 | | 43,11 | 55,68 | 33,29 | 0,480 |
| 18340 | 0,487 | 1,88 | 21,20 | 232 | 48,00 | 51,07 | 47,67 | 0,910 |
| | | | 33,84 | | 50,10 | 53,91 | 48,78 | 0,860 |
| | | | 56,80 | | 29,80 | 39,49 | 26,58 | 0,600 |
| 19900 | 0,487 | 1,88 | 19,80 | 232 | 45,68 | 44,21 | 45,75 | 1,050 |
| | | | 30,00 | | 48,30 | 50,69 | 47,80 | 0,920 |
| | | | 40,00 | | 43,39 | 60,85 | 39,62 | 0,540 |

** R2 = Log (1-p2)/Log (1-p1)*
*p1 : conversion du macromonomère*
*p2 : conversion du monomère*

## EXEMPLE 3

### *3.1- Synthèse du macromonomère polyméthacrylate de méthyle*

47 g (0,47 mole) de méthacrylate de méthyle sont polymérisé en présence de 400 mg (2,4 $10^{-3}$ mole) d'AIBN ET 3?5 g (2,24 $10^{-2}$ mole) de 5-t butylthio 1,3-pentadiène à 70°C pendant 4 heures. Le produit de la réaction est dilué avec 150 Ml de THF et précipité dans 1,5 l d'heptane. Le produit précipité est filtré, séché à 50°C sous vide. Son poids sec est de 20 g, soit un rendement pondéral de 42,5 %.

### *3.2- Synthèse du copolymère greffé macromonomère polymethacrylathe:styréne*

On reproduit le mode opératoire de l'exemple 2.2 ci-dessus. Le polymère greffé est précipité dans le méthanol contenant 10 % en volume d'acétone. L'absence de polymère greffé dans le filtrat a également été mis en évidence par GPC. Les résultats obtenus sont rassemblés dans le tableau 2 ci-après.

## TABLEAU 2
## COPOLYMERISATION MACROMONOMERE POLYMETHACRYLATE DE METHYLE-DIENE / STYRENE

| Mn du macromonomère (g/mole) | AIBN mole/l (x100) | MMA mole/l | Macromonomère g/l | Temps mn | Conversion % poids | 100 p1 | 100 p2 | R2 * |
|---|---|---|---|---|---|---|---|---|
| 2390 | 1,016 | 2,90 | 22,2<br>35,0<br>48,0<br>65,0 | 120 | 10,98<br>10,61<br>10,28<br>10,00 | 5,00<br>4,27<br>4,19<br>4,17 | 11,42<br>11,35<br>11,24<br>11,24 | 2,36<br>2,76<br>2,78<br>2,79 |
| 6360 | 0,61 | 1,74 | 36,1<br>101,1<br>135,5<br>177,2 | 174 | 10,12<br>7,20<br>7,55<br>7,21 | 6,47<br>4,87<br>4,01<br>4,43 | 10,84<br>8,50<br>10,20<br>9,94 | 1,71<br>1,78<br>2,63<br>2,31 |
| 12770 | 0,61 | 1,74 | 68,3<br>91,4<br>110,0<br>130,0<br>170,0 | 170 | 8,98<br>8,86<br>8,76<br>8,88<br>8,02 | 4,79<br>4,47<br>4,90<br>5,38<br>6,04 | 11,12<br>11,02<br>11,10<br>11,39<br>9,90 | 2,40<br>2,55<br>2,34<br>2,20<br>1,70 |

*(*) R2 = Log (1-p2)/Log (1-p1)*
*p1 : conversion du macromonomère*
*p2 : conversion du monomère*

## EXEMPLE 4

***Synthèse du copolymère greffé macromonomére polystyrène/acide methacrylique***

On prépare le macromonomère selon le mode opératoire de l'exemple 2.1.

La polymérisation du macromonomère polystyrène et de l'acide méthacrylique est conduite dans un mélange DMSO : Dioxane (3,2) en présence d'AIBN, à 70°C. Le polymère est précipité dans le cyclohexane puis redissous dan le solvant de polymérisation pour une deuxième purification. Les conditions de polymérisation et les résultats obtenus sont rassemblés tableau 3 ci-après.

## TABLEAU 3

### COPOLYMERISATION MACROMONOMERE POLYSTYRENE-DIENE / ACIDE METHACRYLIQUE

| AIBN mole/l (x100) | Acide méthacrylique mole/l | Macromo-nomère g/l | Temps mn | Conversion % poids | 100 p1 | 100 p2 | R2 (*) |
|---|---|---|---|---|---|---|---|
| 0,488 | 2,32 | 39,5 | 215 | 69,1 | 36,5 | 75,3 | 3,00 |
| | | 79,6 | | 43,1 | 35,2 | 46,1 | 1,43 |
| | | 117,6 | | 34,7 | 28,9 | 40,0 | 1,40 |
| | | 134,6 | | 38,9 | 48,0 | 32,7 | 0,60 |

*Mn du macromonomère = 4860 g/mole*

*(*) R2 = Log (1-p2)/Log (1-p1)*
*p1 : con*version du macromonomère*
*p2 : conversion du monomère*

**Revendications**

**1-** Procédé de préparation d'un copolymère polyoléfinique greffé par un macromonomère polyoléfinique possédant à l'une de ses extrémités un groupement terminal oléfinique, caractérisé en ce que au cours d'une première étape on polymérise par polymérisation radicalaire au moins un monomère à insaturation éthylénique en présence d'une quantité efficace d'un agent de transfert diène conjugué répondant à la formule générale :

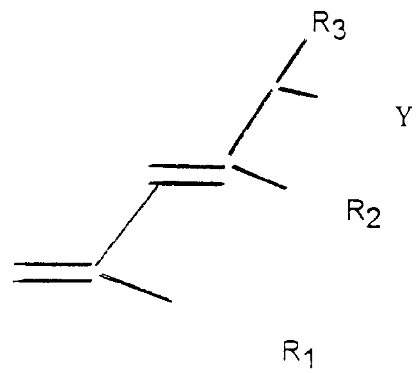

dans laquelle

. les radicaux $R_1$, $R_2$,et $R_3$ identiques ou différents sont choisis parmi un atome d'hydrogène, un radical alkyle linéaire ou ramifié en $C_1$ - $C_6$, un radical phényle, un radical alcoxycarbonyle, un radical acyloxy et un radical acylamino, dans lesquels la partie alkyle est linéaire ou ramifiée en $C_1$ - $C_6$, un radical phénoxycarbonyle et un radical cyano.

Le radical Y est choisi parmi les radicaux :

- un halogène choisi parmi le chlore, le brome et l'iode,
- X - R4 et - C H(R5 R6) dans lesquels :

R4 est choisi parmi un radical alkyle linéaire ou ramifié en $C_1$ - $C_6$, un radical phényle et un radical acyle dont la partie alkyle linéaire ou ramifiée est en $C_1$ - $C_6$

X est un hétéroatome choisi parmi O et S

$R_5$ est un radical capteur d'électrons choisi parmi un radical cyano, carbamoyle, phényloxycarbonyle, alcoxycarbonyle et phénylcarbonyle dans lequel la partie alkyle linéaire, cyclique ou ramifiée est en $C_1$ - $C_6$,

$R_6$ est un radical donneur d'électron choisi parmi un radical alkylthyoéther, phénylthioéther, amino, alkylamino, alcoxy et phénoxy dans lequel la partie alkyle linéaire, cyclique ou ramifiée est en $C_1$ - $C_6$

et dans une deuxième étape, on copolymèrise par polymérisation radicalaire, en présence d'une quantité efficace d'un initiateur ou amorçeur à radicaux libres un macromonomère préparé à la première étape avec au moins un monomère à insaturation éthylénique.

**2-** Procédé selon la revendication 1, caractérisé en ce que le monomère à insaturation éthylénique de la deuxième étape est choisi parmi l'un de ceux indiqués pour la synthèse du macromonomère à la première étape.

**3-** Procédé selon la revendication 2, caractérisé en ce que ledit monomère est choisi parmi le styrène, le butadiène, le méthacrylate de méthyle, l'acide acrylique ou leurs mélanges.

**4-** Procédé selon l'une quelconque des revendications précédentes caractérisé en ce que lors de la 1ére étape la conversion de monomère en macromère est inférieure à 90 %, de préference comprise entre 30 et 85 %.

**5-** Procédé selon l'une quelconque des revendications précédentes, caractérisé en ce qu'on utilise de 0,1 à 60 %, de préference de 1 à 30 % en poids de macromonomère par rapport au poids du copolymère obtenu.

**6-** Procédé selon l'une quelconque des revendications précédentes, caractérisé en ce que, lors de la première étape, le macromonomère est préféré par polymérisation en émulsion et que le copolymère greffé est préparé au cours de la deuxième étape par polymérisation dans un solvant organique.

**7-** Procédé selon l'une quelconque des revendications précédentes, caractérisé en ce que l'agent de transfert utilisé lors de la première étape est le 5-t butylthio 1,3-pentadiène.

Office européen des brevets

# RAPPORT DE RECHERCHE EUROPEENNE

Numero de la demande
EP 95 40 1293

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,Y | EP-A-0 597 747 (RHONE-POULENC CHIMIE)<br>* revendications; exemples *<br>* page 4, ligne 25 - ligne 28 *<br>--- | 1-7 | C08F290/04 |
| Y | EP-A-0 520 668 (ROHM & HAAS)<br>* page 2, ligne 45 - ligne 52; revendications; exemples *<br>----- | 1-7 | |
| | | | **DOMAINES TECHNIQUES RECHERCHES (Int.Cl.6)** |
| | | | C08F |

Le présent rapport a été établi pour toutes les revendications

| Lieu de la recherche | Date d'achèvement de la recherche | Examinateur |
|---|---|---|
| LA HAYE | 27 Juillet 1995 | Loiselet-Taisne, S |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)